Europäisches Patentamt

European Patent Office

Office européen des brevets

(11) Veröffentlichungsnummer: **0 191 457**
**A1**

(12) **EUROPÄISCHE PATENTANMELDUNG**

(21) Anmeldenummer: 86101699.6

(22) Anmeldetag: 11.02.86

(51) Int. Cl.⁴: **B 23 B 51/10**

(30) Priorität: 14.02.85 DE 3505084

(43) Veröffentlichungstag der Anmeldung: 20.08.86
Patentblatt 86/34

(84) Benannte Vertragsstaaten: **AT BE CH DE FR GB IT LI LU NL SE**

(71) Anmelder: **Heule, Heinrich, Kristallstrasse 6, CH-9434 Au (CH)**

(72) Erfinder: **Heule, Heinrich, Kristallstrasse 6, CH-9434 Au (CH)**

(74) Vertreter: **Riebling, Günter, Dr. et al, Patentanwälte Dr.-Ing., Dipl.-Ing., Ing.(grad) Günter Riebling Dr.-Ing., Dipl.-Ing. Peter Riebling Rennerle 10 Postfach 3160, D-8990 Lindau (Bodensee) (DE)**

(54) Entgratwerkzeug zur Entgratung von Bohrungsrändern von gewölbten oder schrägen Werkstücksoberflächen.

(57) Das Entgratwerkzeug dient zur Entgratung von Bohrungsrändern, vorzugsweise in gewölbten oder schrägen Werkstücksoberflächen und besteht aus einem drehend angetriebenen Werkzeughalter, an dem ein oder mehrere Schneidmesser angeordnet sind, die in axialer Richtung verschiebbar gesteuert sind. Die Steuerung erfolgt dadurch, dass der Werkzeughalter selbst axial verschiebbar in einem feststehenden Grundkörper gelagert ist, wobei die axiale Verschiebung des Werkzeughalters durch eine Steuerkurve erfolgt, die der Wölbung des Bohrungsrandes entspricht.

- 1 -

Entgratwerkzeug zur Entgratung von
Bohrungsrändern von gewölbten oder schrägen
Werkstücksoberflächen
---------------------------------------------------

Die Erfindung betrifft ein Entgratwerkzeug nach dem Oberbegriff des Patentanspruchs 1.

Ein eingangs genanntes Entgratwerkzeug ist beispielsweise mit der auf den gleichen Anmelder zurückgehenden DE-AS 25 59 145 bekannt geworden, bei welcher der Bohrungsrand unter Federkraft abgetastet wird, so daß die radial im Werkzeughalter gelagerten Schneidmesser auch unrunde Bohrungen oder unterbrochene Bohrungen gleichmäßig entgraten können. Mit diesem bekannten Entgratwerkzeug ist es jedoch nicht möglich, Bohrungen in gewölbten oder schrägen Werkstücksoberflächen zu entgraten, weil die Schneidmesser stets in einer Ebene liegen und das Entgratwerkzeug selbst in seiner axialen Richtung nicht verschiebbar ist.

Mit dem Gegenstand der auf den gleichen Anmelder zurückgehenden DE-AS 25 48 214 ist ein weiteres Entgratwerkzeug bekannt geworden, bei dem die Schneidmesser axial verschiebbar in einem Werkzeughalter geführt sind und die axiale Verschiebung der Schneidmesser durch Aufsitzen entsprechender Abtastflächen an der gewölbten oder schrägen Werkstücksoberfläche erfolgt. Damit ist es jedoch nicht möglich, Bohrungsränder in gewölbten oder schrägen Werkstücksoberflächen zu entgraten, bei denen ein relativ ungünstiges Verhältnis vom Durchmesser des Bohrungsrandes zum Durchmesser des runden Werkstückes besteht.
Bei Werkstücken mit relativ geringem Durchmesser und bei Werkstücken mit relativ großen Bohrungsdurchmessern ist die Entgratwirkung des eingangs genannten Entgratwerkzeuges ungenügend. Zudem sind die axialen Verschiebungen der einzelnen Schneidmesser voneinander abhängig, so daß es beispielsweise nicht gelingt, beliebig geformte und gewölbte Werkstücksoberflächen zu entgraten, also auch solche, deren Bohrungsrand nicht in einer sphärischen Ebene liegt, sondern deren Bohrungsrand in sich gewölbt oder verformt ist.

Die vorliegende Erfindung hat die Aufgabe, ein Entgratwerkzeug der eingangs genannten Art so weiterzubilden, daß beliebig geformte und gewölbte oder auch schräge Werkstücksoberflächen mit hoher Entgratleistung entgratet werden können.

Zur Lösung der gestellten Aufgabe ist die Erfindung dadurch gekennzeichnet, daß der Werkzeughalter axial verschiebbar in einem feststehenden Grundkörper gelagert ist, und daß die axiale Verschiebung des Werkzeughalters durch eine Steuerkurve erfolgt, die der Wölbung des Bohrungsrandes entspricht.

Wesentliches Merkmal der vorliegenden Erfindung ist, daß nun nicht mehr die einzelnen Schneidmesser axial verschiebbar in dem Werkzeughalter geführt sind, sondern daß die Schneidmesser axial unverschiebbar in einem Werkzeughalter geführt sind, der seinerseits axial verschiebbar in einem zugeordneten Rundkörper axial verschiebbar gelagert ist.

Die axiale Verschiebung des Werkzeughalters im Grundkörper wird durch eine Steuerkurve angesteuert, die der Kontur des beliebig verformten Bohrungsrandes entspricht; wobei hierbei eine Verformung des Bohrungsrandes in Richtung des Vorschubes des Werkzeughalters gemeint ist.

Würde man einen axial unverschiebbaren Werkzeughalter verwenden, dann würde bei einem Bohrungsrand, welcher in einer gewölbten Werkstücksoberfläche angeordnet ist, statt einer kreisförmigen Entgratfläche eine elliptische Entgratfläche am Bohrungsrand die Folge sein.

Es ist also bei derartigen Bohrungsrändern erforderlich, daß die Schneidmesser bei einer Umdrehung am Bohrungsrand zwei Hoch-Bewegungen und zwei Tief-Bewegungen durchführen. Die Steuerkurve im Werkzeughalter ist daher so ausgebildet, daß der Werkzeughalter in Bezug zu dem Grundkörper genau zwei axiale Auswärtsbewegungen und zwei axiale Einwärtsbewegungen durchführt, so daß die Schneidmesser stets kraftschlüssig in Kontakt mit dem Bohrungsrand geführt werden und eine kreisrunde Entgratung des in der gewölbten Werkstücksoberfläche liegenden Bohrungsrandes ausführen.

Ein anderer wichtiger Anwendungsfall der vorliegenden Erfindung ist die Entgratung von schrägen Werkstücksoberflächen, d.h. die Achse des Bohrungsrandes liegt im Winkel zur Vorschubrichtung des Werkzeughalters.

Bei diesem Entgratungsfall muß das Entgratwerkzeug lediglich eine Hoch- und eine Tiefbewegung durchführen. Die Steuerkurve ist dementsprechend ausgebildet und bei diesem Entgratwerkzeug darf nur ein einziges Schneidmesser am Werkzeughalter angeordnet sein, welches während einer vollen Umdrehung entlang des Bohrungsrandes eine Hoch- und eine Tiefbewegung ausführt.

Mit dem vorliegenden Entgratwerkzeug ist es ebenso möglich, Bohrungsränder in gewölbten und schrägen Werkstücksoberflächen zu entgraten und es ist ferner möglich, Bohrungsränder in gewölbten Werkstücksoberflächen zu entgraten, wobei die Bohrungsachse außermittig zur Querachse des Werkstückes liegt.

Nachdem man die Formgebung der Steuerkurve genau entsprechend dem Verlauf des Bohrungsrandes anpassen kann, ist es demzufolge auch möglich, mehrfach gewölbte und gewellte Bohrungsränder in runden oder teilrunden (ovalen, elliptischen und dergleichen) Werkstücksoberflächen zu entgraten.

Ein besonderer Vorteil der vorliegenden Erfindung liegt darin, daß der Werkzeughalter mit seinen darin angeordneten Schneidmessern leicht auswechselbar im Grundkörper gehalten ist und daß dadurch beliebige Werkzeughalter verwendet werden können, beispielsweise auch solche, wie sie in den vorher genannten DE-AS 25 59 145 und 25 48 214 beschrieben wurden. Damit ist es dann nicht nur möglich, Bohrungsränder in beliebig gewölbten oder schrägen Werkstücksoberflächen zu entgraten, sondern es ist zusätzlich möglich, auch beliebig unrunde Bohrungsränder in derartigen Werkstücksoberflächen zu entgraten, weil entsprechend der technischen Lehre der beiden genannten DE-ASen der Rand der Bohrung von entsprechenden Abtastflächen der Schneidmesser abgetastet werden und die radiale Verschiebung der Schneidmesser dementsprechend gesteuert wird.

Eine besonders einfache konstruktive Ausführung eines erfindungsgemäßen Entgratwerkzeuges ergibt sich nach dem Gegenstand des Anspruches 2 dadurch, daß die Steuerkurve im Bereich einer radialen Steuernut angeordnet ist, welche in einen mit dem Werkzeughalter verbundenen Kurvenkörper eingeschnitten ist, wobei sich an der Steuerkurve ein oder mehrere mit dem Grundkörper verbundene und radial in die Steuernut eingreifende Lagerbolzen abwälzen. Es wird also eine formschlüssige Steuerung der axialen Verschiebung des Werkzeughalters im Grundkörper vorgeschlagen, wobei ein oder mehrere mit dem Grundkörper verbundene und radial in die Steuernut des Werkzeughalters

- 5 -

eingreifende Lagerbolzen während der Drehung des Lagerbolzens sich formschlüssig an der einen oder an beiden
Steuerkurven der Steuernut abwälzen.

Zur Entgratung gewölbter symmetrischer Bohrungsränder
werden entsprechend der oben genannten Beschreibung zwei
Hoch- und zwei Tiefbewegungen des Werkzeughalters im
Grundkörper ausgeführt. Demzufolge ist es möglich, zwei
gegenüberliegende Lagerbolzen zu verwenden, die sich an
zugeordneten Flächen der Steuerkurve im Kurvenkörper abstützen.

Zur Entgratung von in Bezug zur Vorschubrichtung schräg
liegenden Bohrungsrändern darf aber lediglich nur ein
Lagerbolzen im Grundkörper angeordnet sein, welcher sich
an der Steuerkurve im Bereich der Steuernut abwälzt.
Gleichfalls darf nur ein einziges Schneidmesser vorhanden sein.

Weitere Merkmale der Erfindung sind Gegenstand der
übrigen Unteransprüche.

Der Erfindungsgegenstand der vorliegenden Erfindung ergibt
sich nicht nur aus dem Gegenstand der einzelnen Patentansprüche, sondern auch aus der Kombination der einzelnen
Patentansprüche untereinander.
Alle in den Unterlagen offenbarten Angaben und Merkmale,
insbesondere die in den Zeichnungen dargestellte räumliche
Ausbildung werden als erfindungswesentlich beansprucht,
soweit sie einzeln oder in Kombination gegenüber dem
Stand der Technik neu sind.

Im folgenden wird die Erfindung anhand von lediglich
einen Ausführungsweg darstellende Zeichnungen näher
erläutert. Hierbei gehen aus den Zeichnungen und ihrer
Beschreibung weitere erfindungswesentliche Merkmale und

- 6 -

Vorteile der Erfindung hervor.

Es zeigen:

Figur 1: Teilschnitt durch ein Entgratwerkzeug nach der vorliegenden Erfindung;

Figur 2: Schnitt durch ein Werkstück mit gewölbtem, symmetrischem Bohrungsrand;

Figur 3: Schnitt durch ein Werkstück mit schrägem Bohrungsrand;

Figur 4: Teilschnitt durch das Entgratwerkzeug nach Figur 1;

Figur 5: Schnitt gemäß der Linie V-V in Figur 4.

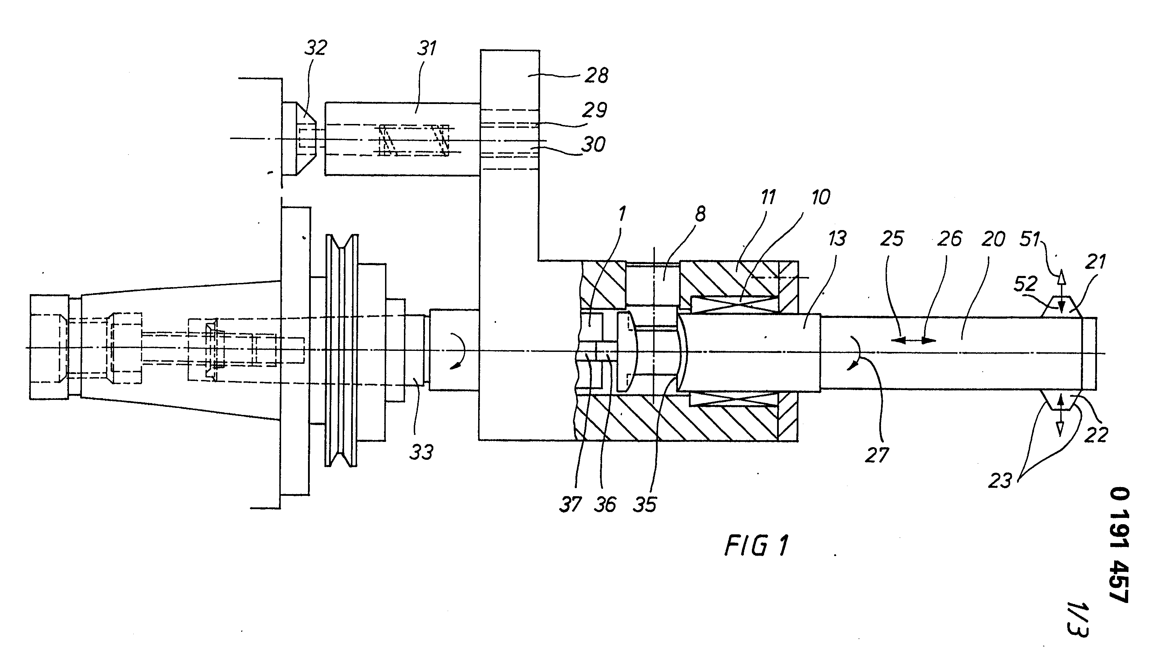

In Figur 1 ist der Werkzeughalter 20 in den axialen Richtungen 25,26 verschiebbar in dem Grundkörper 11 gelagert.

Der Grundkörper 11 ist automatisch auswechselbar, es handelt sich hierbei um einen NC-gesteuerten Werkzeugwechsel, wobei der feststehende Arm 28 eine Aufnahmebohrung 29 aufweist, in welche der Indexstift 30 einer Positioniervorrichtung 31 eingreift, dessen gegenüberliegender Stift in einer festen Aufnahmebuchse 32 am Antriebsgehäuse der Werkzeugmaschine eingreift.

Der Drehantrieb in Pfeilrichtung 27 erfolgt über die Antriebsachse 33, welche drehend den Werkzeughalter 20 antreibt, der mit Hilfe von entsprechenden Kugellagern drehbar im Grundkörper 11 gelagert ist.

Die axiale Verschiebung in den Pfeilrichtungen 25,26 des
Werkzeughalters 20 erfolgt dadurch, daß stirnseitig an
einem Kurvenkörper 13 eine Steuerkurve 35 angeordnet ist,
an welcher sich das Kugellager 9 abwälzt, welches an
einem ortsfesten Lagerbolzen 8 im Grundkörper 11 befestigt ist.

Die Mitnahme des Kurvenkörpers 13 in Pfeilrichtung 27
erfolgt über entsprechende Drehkupplung, die aus einem
Mitnahmezapfen 36 mit beispielsweise rechteckigem Querschnitt besteht, der in eine zugeordnete Mitnahmenut 37
am gegenüberliegenden Führungszapfen 1 eingreift.

Am vorderen, freien Ende des Werkzeughalters 20 sind
zwei einander gegenüberliegende Schneidmesser 21 angeordnet, welche sowohl in Vorschubrichtung weisende
Schneidkanten 23 als auch in Rückhubrichtung liegende
Schneidkanten 23 aufweisen.

Die Schneidmesser sind in den radialen Pfeilrichtungen
51,52 verschiebbar im Werkzeughalter 20 gelagert, so daß
es mit einem solchen Entgratwerkzeug auch gelingt, unrunde Bohrungsränder zu entgraten.

Eine vereinfachte Ausführungsform könnte jedoch nur vorsehen, daß ein einziges Schneidmesser 21 im Werkzeughalter 20 angeordnet ist und eine weitere nicht näher
dargestellte Ausführungsform könnte vorsehen, daß das
Schneidmesser durch ein entsprechendes stirnseitig aufsitzendes kegeliges Schneidmesser (Kegelsenker) ersetzt
ist.

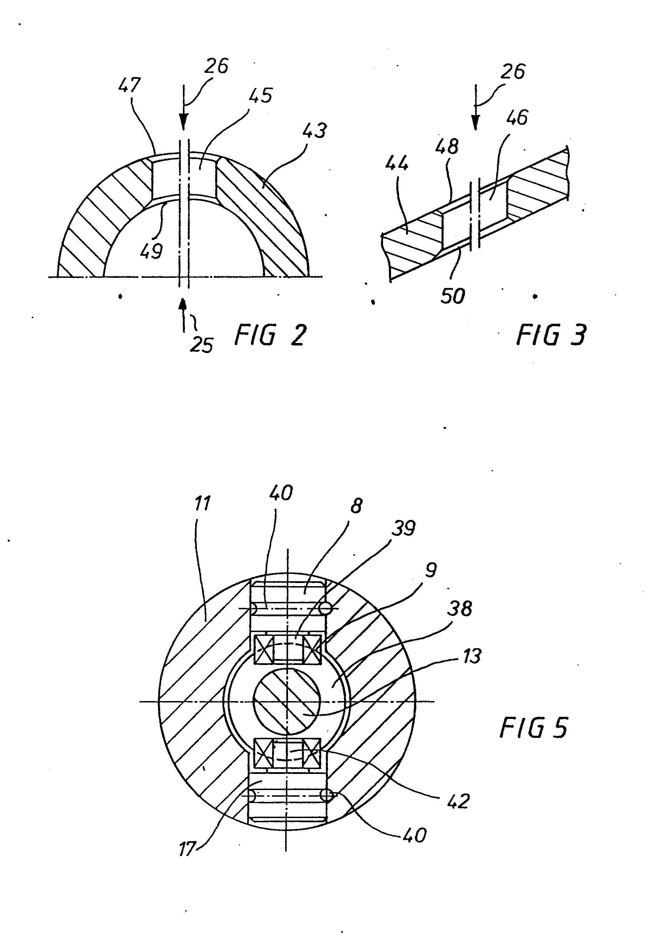

Mit dem in Figur 1 gezeigten Entgratwerkzeug ist es demzufolge möglich, bei dem in Figur 2 gezeigten Werkstück
43 in Pfeilrichtung 26 sowohl den oberen Bohrungsrand 47
der Bohrung 45 zu entgraten, als auch während einer Rückhubbewegung in Pfeilrichtung 25 den inneren Bohrungsrand 49.

Hierzu ist es erforderlich, daß nach dem Entgraten des oberen Bohrungsrandes 47 bei dem in Pfeilrichtung 26 fortschreitenden Entgratwerkzeug die Schneidmesser 21 in Pfeilrichtung 52 radial einwärts verstellt werden, so daß das Werkzeug ohne Schnittaktion die Bohrung 45 durchquert und nach dem Austritt aus der Bohrung 45 im Rückhub (Pfeilrichtung 25) bei in Pfeilrichtung 51 ausgefahrenen Schneidmessern 21,22 den inneren Bohrungsrand 49 entgratet.

Eine gleiche Entgrataktion ist auch bei den in Figur 3 gezeigten schrägen Bohrungsrändern 48,50 möglich, die jeweils an der Eingangs- und Ausgangsseite der Bohrung 46 im Bereich des Werkstückes 44 angeordnet sind.

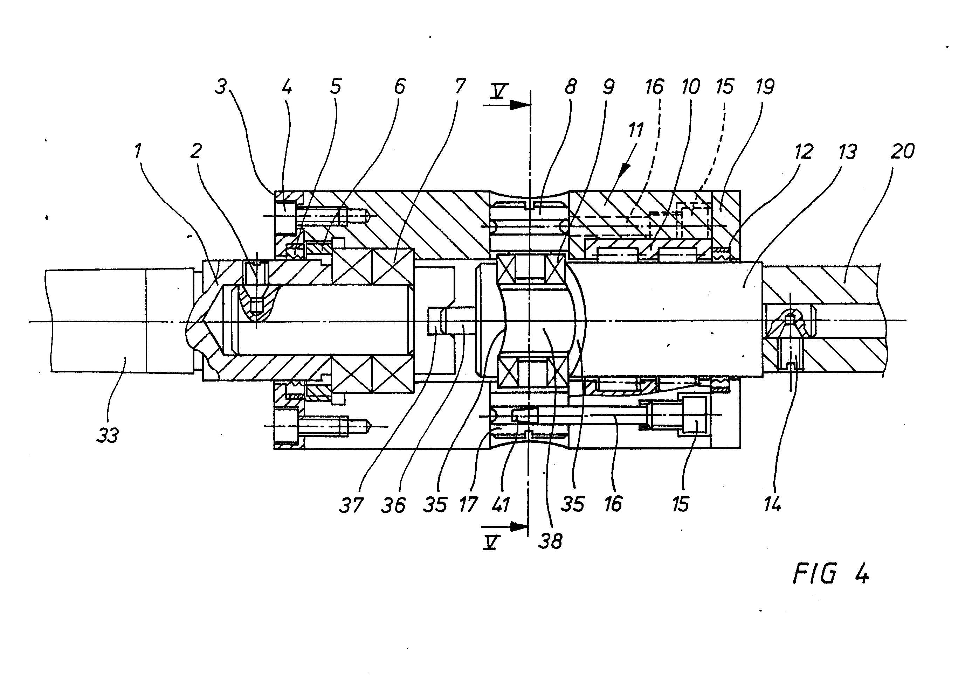

Gemäß der Darstellung in Figur 4 ist die Antriebsachse 33 über eine konische Stiftschraube 2 drehfest gekoppelt, wobei die Konizität der Stiftschraube bewirkt, daß beim Einschrauben dieser Stiftschraube 2 die beiden nebeneinanderliegenden Kugellager 7 in axialer Richtung gegeneinander gepreßt und vorgespannt werden.

Die Anpressung der beiden Kugellager 7 erfolgt dadurch, daß sich das eine Kugellager 7 stirnseitig an einem Ab-satz des Grundkörpers 11 abstützt und das andere Kugellager sich stirnseitig an einem Absatz des Führungszapfens 1 anlegt.

Stirnseitig am Führungszapfen 1 ist ein Lagerdeckel 3 angeordnet, der mit Hilfe entsprechender Schrauben 4 mit dem Grundkörper 11 verschraubt ist, wobei 5 ein Abdichtring und 6 ein Gewindering ist, der das Kugellager 7 fixiert.

- 9 -

Damit ist der Führungszapfen 1 über die dargestellten
Kugellager 7 drehbar im Grundkörper 11 gehalten.

Die Drehkupplung mit dem in axialer Richtung verschiebbaren Kurvenkörper 13 erfolgt in der vorher beschriebenen
Weise über die stirnseitige Mitnahmenut 37, in die der
mit dem Kurvenkörper 13 drehfest verbundene Mitnahmezapfen 36 eingreift.

Die Lagerung des Kurvenkörpers 13 im Grundkörper 11 erfolgt in der nachfolgend beschriebenen Weise:

Auf der gegenüberliegenden Stirnseite des Grundkörpers
11 ist gleichfalls ein Lagerdeckel 19 mit dem Grundkörper 11 verbunden und zwar mit Schrauben, die zeichnerisch nicht näher dargestellt sind. Am Innenumfang ist
ein Dichtring 12 angebracht, der innen den drehbaren
Kurvenkörper 13 aufnimmt. Am Außenumfang des drehbaren
und axial verschiebbaren Kurvenkörpers 13 ist hierbei
ein Nadellager 10 angebracht, welches sich einerseits
stirnseitig an dem Deckel 19 und andererseits an einem
gehäusefesten Absatz des Grundkörpers 11 abstützt.

Stirnseitig am Kurvenkörper 13 ist die vorher erwähnte
Steuerkurve 35 angebracht, die Teil einer Steuernut 38
ist, wobei an der gegenüberliegenden Stirnseite der
Steuernut eine gleiche Steuerkurve 35 angebracht ist.
Hierdurch ist der gesamte Kurvenkörper 13 formschlüssig
im Bereich der Steuernut 38 von dem Lagerbolzen 8 geführt und zwar von dessen Kugellagern 9, wobei sich das
eine Kugellager 9 an der einen Steuerkurve 35 abstützt
und das andere Kugellager 9 an der gegenüberliegenden
Steuerkurve 35 im Bereich der Steuernut 38.

Die beiden  Kugellager 9 sind auf einem Zapfen 39 des
Lagerbolzens 8 aufgezogen. Bei der Entgratung asymmetrischer Bohrungsränder wird hierbei nur ein einziger Lagerbolzen 8 mit zwei Kugellagern 9 verwendet, während im gezeigten Ausführungsbeispiel ein Entgratwerkzeug für die Entgratung symmetrischer Bohrungsränder gezeigt ist, wo zwei gegenüberliegende Lagerbolzen 8,17 mit zugeordneten Kugellagern 9 verwendet werden.

Mit dem in Figur 4 gezeigten Entgratwerkzeug wäre es also nur möglich, einen Bohrungsrand nach Figur 2, und zwar bei genau kreiszylindrischem Bohrungsumfang, zu entgraten, weil hier zwei Hoch- und zwei Tiefpunkte der Steuerkurve erforderlich sind, und die beiden gegenüberliegenden Lagerbolzen genau die Hoch- und Tiefpunkte abtasten.

Im Falle einer asymmetrischen Bohrung nach Figur 3 wäre nur ein einziger Hochpunkt und ein einziger Tiefpunkt vorhanden, so daß ein einziger Lagerbolzen 8 vorhanden ist, und der gegenüberliegende Lagerbolzen 8 in Figur 4 dann entfernt wird, und eine andere Form der Steuerkurve vorgeschrieben ist.

Die Befestigung und Fixierung der Lagerbolzen 8 in dem Grundkörper 11 wird nachfolgend beschrieben.

Im gezeigten Ausführungsbeispiel ist der obere Lagerbolzen zentrisch gelagert, während der untere Lagerbolzen 17 exzentrisch verstellbar ist, um eine spielfreie Anpassung an die Steuerkurven 35 im Bereich der Steuernut 38 zu erreichen.

Der obere Lagerbolzen 8 und der untere Lagerbolzen 17 weisen beide einen radialen Einstich 40 auf, in welche das konische Ende 41 des Positionierstiftes 16 eingreift, der in seiner axialen Richtung dadurch verschiebbar ist, daß sein eines Stirnende an dem zugeordneten Gewindebolzen einer Druckschraube 15 anliegt, die in ein zugeordnetes Gewinde im Grundkörper 11 eingeschraubt ist.

Mit Verstellung der Druckschraube 15 wird also der Positionierstift 16 mehr oder weniger mit seinem konischen Ende 41 in den radialen Einstich 40 des Lagerbolzens 8,17 eingedrückt.

Dadurch sind die Lagerbolzen 8,17 gegen Herausfallen und gegen Verdrehung aus der ihnen zugeordneten Bohrung im Grundkörper 11 gesichert.

Durch Herausnahme der beiden Lagerbolzen 8,17 gelangen also dann die Kugellager 9 außer Eingriff mit der Steuernut 38, wodurch auf sehr einfache Weise der gesamte Kurvenkörper 13 nach vorne aus dem Grundkörper 11 abgezogen werden kann, und durch ein entsprechendes anderes Entgratwerkzeug ersetzt werden kann.

Es ist hierdurch auch besonders einfach, eine entsprechende Steuernut 38 in den jeweiligen Kurvenkörper 13 einzuarbeiten.

Der untere Lagerbolzen 17 ist in der vorher beschriebenen Weise exzentrisch verstellbar, um eine spielfreie Anpassung seiner Kugellager 9 an die zugeordneten Steuerkurven 35 im Bereich der Steuernut 38 zu erreichen.

Die zentrische Verstellung erfolgt hierbei dadurch, daß der Zapfen 42, welcher die Kugellager 9 aufnimmt, exzentrisch bezüglich der Mittenlängsachse durch den Lagerbolzen angeordnet ist, so daß bei Verdrehung des Lagerbolzens 17 die Kugellager 9 sich mehr oder weniger radial auswärts verstellen und sich mehr oder weniger an die zugeordnete Steuerkurve 35 im Bereich der Steuernut 38 anlegen.

Nach erfolgter spielfreier Einstellung des unteren Lagerbolzens 17 wird er dann durch Eingreifen des Positionierstiftes 16 in den zugeordneten radialen Einstich 40, und
durch Einschrauben der Druckschraube 15 arretiert.

Mit dem stirnseitig aufgeschraubten Lagerdeckel 19 sind
die beiden Druckschrauben 15 gegen unbeabsichtigtes Verstellen und gegen Herausfallen gesichert.

Mit der Stiftschraube 14 können beliebige Werkzeughalter
20 in dem Kurvenkörper 13 befestigt werden und sind dadurch leicht auswechselbar gehalten.

Die Stiftschraube 14 hat die weitere Aufgabe, die genaue
Verdrehlage des Werkzeughalters 20 in Bezug zu dem
Kurvenkörper 13 festzulegen.

Durch Einstellen der Stiftschraube 14 und Verdrehung des
Werkzeughalters muß dafür gesorgt werden, daß die Schneidmesser 21,22 am höchsten Punkt des Bohrungsrandes 47-50
aufliegen, wenn der Kurvenkörper 13 seine maximal mögliche, axial einwärts gerichtete Verschiebungslage eingenommen hat.

Im vorliegenden Ausführungsbeispiel wurde eine Steuernut 38 mit zwei stirnseitig begrenzenden Steuerkurven 35
beschrieben.

In einer Abwandlung des Erfindungsgedankens ist es auch
möglich, eine einseitig offene Steuernut 38 zu nehmen,
die also nur eine einzige Steuerkurve aufweist. Hierbei
ist es dann erforderlich, daß der Kurvenkörper 13 axial
federbelastet mit seiner Steuerkurve gegen das zugeordnete Kugellager 9 am Lagerbolzen 8 angepreßt wird; die
gegenüberliegende Steuerkurve 35 benötigt man dann
nicht.

Merkmal dieser vereinfachten Ausführungsform ist allerdings, daß nur ein Entgraten im Vorschubgang möglich ist, nicht aber im Rückhubgang, weil im Rückzugsgang möglicherweise dann die Federkraft der Feder nicht ausreicht, mit ausreichender Kraft die Steuerkurve 35 an das zugeordnete Kugellager 9 des Lagerbolzens 8 anzudrücken.

Dieses vereinfachte Ausführungsbeispiel ist also im wesentlichen nur für Entgratwerkzeuge geeignet, bei denen im Vorwärtsgang entgratet werden soll.

In einer weiteren vereinfachten Ausführungsform kann die exzentrische Verstellung des unteren Lagerbolzens 17 entfallen, denn es ist technisch ohne weiteres möglich, die Steuernut 38 so genau auszuarbeiten, daß die Kugellager 9 der beiden gegenüberliegenden Lagerbolzen 8,17 formschlüssig und im wesentlichen ohne Spiel an den zugeordneten Steuerkurven 35 der Steuernut 38 anliegen.

Zeichnungs-Legende
-------------------

 1 Führungszapfen
 2 Stiftschraube
 3 Lagerdeckel
 4 Schrauben
 5 Abdichtring
 6 Gewindering
 7 Kugellager
 8 Lagerbolzen
 9 Kugellager
10 Nadellager
11 Grundkörper
12 Dichtring
13 Kurvenkörper
14 Stiftschraube
15 Druckschraube
16 Positionierstift
17 Lagerbolzen

19 Lagerdeckel
20 Werkzeughalter
21 Schneidmesser
22 Schneidmesser
23 Schneidkante
25 Pfeilrichtung
26 Pfeilrichtung
27 Pfeilrichtung
28 Arm
29 Aufnahmebohrung
30 Indexstift

31 Positioniervorrichtung
32 Aufnahmebuchse
33 Antriebsachse
34 Kugellager
35 Steuerkurve
36 Mitnahmezapfen
37 Mitnahmenut
38 Steuernut
39 Zapfen
40 Einstich
41 konisches Ende
42 Zapfen
43 Werkstück
44 Werkstück
45 Bohrung
46 Bohrung
47 Bohrungsrand
48 Bohrungsrand
49 Bohrungsrand
50 Bohrungsrand
51 Pfeilrichtung
52 Pfeilrichtung

Patentansprüche
---------------------------------

1. Entgratwerkzeug zur Entgratung von Bohrungsrändern (47-5o), insbesondere mit gewölbten oder schrägen Werkstücksoberflächen mit einem drehend angetriebenen Werkzeughalter (20), an dem eine oder mehrere Schneidmesser (21,22) angeordnet sind, die in axialer Richtung verschiebbar gesteuert sind, d a d u r c h g e k e n n z e i c h n e t , daß der Werkzeughalter (20) axial verschiebbar in einem feststehenden Grundkörper (11) gelagert ist, und daß die axiale Verschiebung des Werkzeughalters (20) durch eine Steuerkurve (35) erfolgt, die der Wölbung des Bohrungsrandes (47-50) entspricht.

2. Entgratwerkzeug nach Anspruch 1, d a d u r c h g e k e n n z e i c h n e t , daß die Steuerkurve (35) im Bereich einer radialen Steuernut (38) angeordnet ist, welche in einem mit dem Werkzeughalter (20) verbundenen Kurvenkörper (13) eingeschnitten ist, und daß sich an der Steuerkurve (35) ein oder mehrere mit dem Grundkörper (11) verbundene und radial in die Steuernut (38) eingreifende Lagerbolzen (8,17' abwälzen.

3. Entgratwerkzeug nach Anspruch 2, d a d u r c h g e k e n n z e i c h n e t , daß zur Entgratung gewölbter, symmetrischer Bohrungsränder (47,49) zwei einander bezüglich der Mittenlängsachse gegenüberliegende Lagerbolzen (8,17) im Grundkörper (11) angeordnet sind.

4. Entgratwerkzeug nach Anspruch 2, d a d u r c h g e k e n n z e i c h n e t , daß zur Entgratung von in Bezug zur Vorschubrichtung (25,26) schräg liegenden Bohrungsrändern (48,50) lediglich ein Lagerbolzen (8) im Grundkörper (11) angeordnet ist, welcher sich an der Steuerkurve (35) im Bereich der Steuernut (38) abwälzt.

5. Entgratwerkzeug nach Anspruch 2, d a d u r c h g e k e n n z e i c h n e t , daß die Steuernut (38) zwei zueinander parallel, einen gegenseitigen Abstand aufweisende Steuerkurven (35,35) aufweist, und daß die Lagerbolzen (8,17) formschlüssig an beiden Steuerkurven (35,35) anliegen.

6. Entgratwerkzeug nach Anspruch 2, d a d u r c h g e k e n n z e i c h n e t , daß die Steuernut (38) lediglich eine Steuerkurve (35) aufweist, an welcher sich der Lagerbolzen (9,17) abwälzt und daß der Kurvenkörper (13) in axialer Richtung federbelastet mit seiner Steuerkurve (38) gegen den Lagerbolzen (8,17) gepreßt ist.

7. Entgratwerkzeug nach Anspruch 2 und einem der Ansprüche 3 bis 6, d a d u r c h g e k e n n - z e i c h n e t , daß die formschlüssige Anlage des Lagerbolzens (17) an die Steuerkurve (35) dadurch erreicht wird, daß am zentrisch gelagerten Kopf des Lagerbolzens (17) exzentrisch zur Mittenlängsachse ein Zapfen (42) angeordnet ist, auf dem Kugellager (9) angeordnet sind, welche sich an der Steuerkurve (35) abwälzen.

8. Entgratwerkzeug nach Anspruch 2, d a d u r c h g e k e n n z e i c h n e t , daß der Kurvenkörper (13) einen stirnseitigen Mitnahmezapfen (36) aufweist, der drehfest und axial verschiebbar in eine zugeordnete stirnseitige Mitnahmenut (37) eines drehbar im Grundkörper (11) gelagerten Führungszapfens (1) eingreift.

FIG 1

0 191 457

1/3

FIG 2

FIG 3

FIG 5

FIG 4

Europäisches
Patentamt

**EUROPÄISCHER RECHERCHENBERICHT**

| | **EINSCHLÄGIGE DOKUMENTE** | | EP 86101699.6 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
| X | DE - B - 1 928 950 (SIEGENER)<br>* Gesamt *<br>-- | 1-8 | B 23 B 51/10 |
| A | DD - A - 53 509 (NEUBERT)<br>* Fig. 1-3 *<br>-- | 1 | |
| A | CH - A5 - 579 961 (HOLSCHER)<br>* Fig. 1,2,8,9 *<br>---- | 1 | |

| RECHERCHIERTE SACHGEBIETE (Int. Cl.4) |
|---|
| B 23 B 5/00 |
| B 23 B 51/00 |
| B 23 C 3/00 |

Der vorliegende Recherchenbericht wurde für alle Patentansprüche erstellt.

| Recherchenort | Abschlußdatum der Recherche | Prüfer |
|---|---|---|
| WIEN | 15-05-1986 | FUCHS |